# FASCICULE DE BREVET EUROPEEN

(11) **EP 4 443 006 B1**
(45) Date de publication et mention de la délivrance du brevet: **04.06.2025**
(21) Numéro de dépôt: 23216978.9
(22) Date de dépôt: 15.12.2023
(51) Int. Cl.: F04D 13/08, F04D 29/10

(54) **POMPE VERTICALE SEMI-IMMERGÉE**
VERTIKALE HALBTAUCHPUMPE
SEMI-SUBMERGED VERTICAL PUMP

(30) Priorité: 05.04.2023 FR 2303400
(43) Date de publication de la demande: 09.10.2024
(73) Titulaire: Groupe Waterair, 68580 Seppois le Bas (FR)
(72) Inventeur: BILLET, Christophe, 68460 LUTTERBACH (FR); STEINBAUER, Thierry, 90200 GIROMAGNY (FR)
(74) Mandataire: Cabinet Laurent & Charras

(56) Documents cités:
- AU-B2- 2015 286 794
- CN-A- 114 876 857

## Description

### Domaine technique

La présente invention concerne une pompe verticale semi-immergée pour la filtration de l'eau d'un bassin, par exemple d'une piscine. L'invention permet, par exemple, de protéger le moteur de la pompe du sel en cas de pompage d'eau salée.

L'invention trouve une application particulièrement avantageuse dans les blocs filtrants comportant un traitement de l'eau par électrolyse du sel.

### Technique antérieure

Les blocs filtrants des bassins comportent couramment des pompes verticales semi-immergées. Ces pompes comportent une partie basse hydraulique, qui se trouve partiellement immergée dans l'eau du bassin, et une partie haute moteur, qui entraine la partie hydraulique, et se trouve au-dessus du niveau d'eau du bassin.

Dans le cadre de l'amélioration des techniques de traitement de l'eau des bassins, il est aujourd'hui de plus en plus courant d'avoir recours au traitement par électrolyse du sel. L'eau du bassin est alors légèrement salée et lors de l'électrolyse, le sel présent dans l'eau est décomposé en chlore et en soude, ce qui assure une désinfection naturelle.

Or le traitement par électrolyse du sel est aujourd'hui incompatible avec l'usage d'une pompe verticale semi-immergée. En effet ce type de pompe est montée dans le bloc filtrant et se trouve donc à proximité du bassin, dans un environnement avec un taux d'humidité important. Des composants de la partie hydraulique, mais aussi certains composants de la partie moteur, peuvent recevoir des projections et être humidifiés par l'eau salée du bassin. De plus le système de refroidissement du moteur électrique comporte généralement un ventilateur qui souffle de l'air de l'extérieur vers le moteur, vers le bas, et donc en direction de la partie hydraulique. Cet air, réchauffé par le moteur, arrive chaud sur des éléments de la pompe humidifiés par l'eau salée, c'est à dire en bas de la partie moteur et en haut de la partie hydraulique. Cet air chaud provoque l'évaporation de l'eau, et les cristaux de sel se déposent et s'accumulent sur ces éléments de la pompe, causant des phénomènes de corrosion et de grippage mécanique des éléments tournants. Les cristaux de sel progressent ainsi de proche en proche, par capillarité, jusqu'à l'interface entre le bas de la partie moteur et l'arbre vertical s'étendant sous le moteur. Cette progression exerce une pression sur cette interface, ce qui entraine jusqu'à la casse de la pompe verticale semi-immergée.

AU 2015 286 794 B2 décrit une pompe ayant les caractéristiques du préambule de la revendication 1. 15 **Exposé de l'invention** La présente invention vise à pallier ces inconvénients en proposant une pompe verticale semi-immergée pour un groupe de filtration d'eau d'un bassin, notamment une piscine, comportant un corps de pompe dans lequel sont logés un moteur situé au-dessus du niveau de l'eau du bassin, un arbre d'axe vertical s'étendant sous le moteur, l'extrémité basse dudit arbre étant située sous le niveau de l'eau du bassin, ledit arbre étant configuré pour être entrainé en rotation par ledit moteur, et une paroi située sous le moteur et traversée par ledit arbre, ladite paroi étant solidaire dudit corps de pompe. Cette pompe est particulière en ce qu'elle comporte en outre un dispositif d' étanchéité, ledit dispositif d'étanchéité comprenant une ouverture extérieure inférieure traversée par ledit arbre, et dont les bords intérieurs sont en contact avec ledit arbre de manière étanche, et une ouverture extérieure supérieure dont les bords sont en contact avec ladite paroi de manière étanche, ledit dispositif d'étanchéité étant agencé pour former une chambre étanche s'étendant sous ledit moteur et tout autour d'un tronçon dudit arbre.

Grâce à ces dispositions, le haut de la partie hydraulique et le bas de la partie moteur de la pompe, spécialement au voisinage de l'interface entre le moteur et l'arbre, sont protégés de l'eau du bassin, notamment des éclaboussures, et des cristaux de sel. De plus la simplicité de l'invention permet d' ajouter le dispositif d' étanchéité à une pompe existante pour la rendre conforme à un fonctionnement avec de l'eau salée et bénéficier des avantages de l'invention.

Ledit dispositif d'étanchéité peut comporter un déflecteur réalisé de préférence dans un élastomère tel qu'un polymère fluoré, ce qui est un mode de réalisation de l'invention efficace et peu cher.

Ledit déflecteur peut comporter ladite ouverture extérieure inférieure et ladite ouverture extérieure supérieure, ce qui rend possible la mise en œuvre de l'invention de façon très simple, le dispositif d'étanchéité pouvant être constitué principalement voire exclusivement d'une pièce unique adaptable sur une pompe existante.

Ladite pompe peut comporter en outre une cloison située sous ladite paroi et traversée par ledit arbre, ladite cloison étant solidaire dudit corps de pompe, ledit déflecteur comprenant ladite ouverture extérieure inférieure, et une ouverture intérieure supérieure dont les bords sont en contact avec ladite cloison de manière étanche, et le dispositif d'étanchéité comportant en outre un joint de chambre comprenant ladite ouverture extérieure supérieure, et une ouverture intérieure inférieure dont les bords sont en contact avec ladite cloison de manière étanche, ladite ouverture intérieure supérieure et ladite ouverture intérieure inférieure étant traversées par ledit arbre ; ce mode de réalisation rend compatible l'invention avec une pompe existante comportant une cloison horizontale dans la partie hydraulique de la pompe.

Ledit déflecteur peut être solidaire dudit arbre, ce qui permet d'avoir une étanchéité statique, et donc plus forte, entre le déflecteur et l'arbre. Ceci est avantageux car cette interface au niveau de l'ouverture extérieure inférieure est plus sujet aux éclaboussures que l'interface au niveau de l'ouverture extérieure supérieure.

Ledit dispositif d'étanchéité peut être solidaire dudit arbre, ce qui permet d'avoir une étanchéité statique, et donc plus forte, entre le déflecteur et l'arbre. Ceci est avantageux car cette interface au niveau de l'ouverture extérieure inférieure est plus sujet aux éclaboussures que l'interface au niveau de l'ouverture extérieure supérieure.

Ledit dispositif d'étanchéité peut être solidaire dudit corps de pompe.

Ladite chambre étanche peut être au moins en partie remplie par une graisse hydrophobe, le dispositif d'étanchéité avec la graisse hydrophobe formant une double barrière d'étanchéité, ce qui protège plus efficacement le haut de la partie hydraulique et la partie basse du moteur, de l'eau du bassin.

Ladite graisse hydrophobe peut présenter une viscosité cinématique comprise entre 250 et 300 mm2/s, ce qui permet une bonne tenue de la graisse dans la chambre étanche.

Ladite pompe peut comporter au moins un élément annulaire disposé autour de l'arbre, contre et sous la cloison, la distance entre l'élément annulaire et le point de contact entre le déflecteur et la cloison étant inférieure à 3 mm, ce qui permet de former une chicane s'opposant à la sortie d'un produit, par exemple la graisse hydrophobe, de la chambre étanche.

Au moins un élément annulaire peut être disposé hors de la chambre étanche, ce qui est un mode de réalisation efficace de l'invention.

Ladite pompe peut comporter au moins deux éléments annulaires, au moins un des éléments annulaires étant disposé dans la chambre étanche, et au moins un des éléments annulaires étant disposé hors de la chambre étanche, ce qui est un mode de réalisation particulièrement efficace de l'invention.

La présente invention concerne également un groupe de filtration d'eau d'un bassin, notamment une piscine, comportant une pompe verticale semi-immergée selon l'invention, et une cellule d'électrolyse pour un traitement de l'eau au sel.

Grâce à ces dispositions, le haut de la partie hydraulique et le bas de la partie moteur de la pompe, spécialement au voisinage de l'interface entre le moteur et l'arbre, sont protégés de l'eau du bassin, notamment des éclaboussures, qui sont particulièrement nocives lorsque l'eau est salée pour permettre un traitement de l'eau au sel. De plus la simplicité de l'invention permet d'ajouter le dispositif d'étanchéité à une pompe existante pour la rendre conforme et bénéficier des avantages de l'invention.

La présente invention concerne encore un bassin, notamment une piscine, comportant un groupe de filtration selon l'invention, l'eau dudit bassin étant de l'eau salée à une concentration de sel, notamment en chlorure de sodium, comprise entre 0,5 et 6 grammes par litre, de préférence entre 3 et 5 grammes par litre.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
[Fig 1] La figure 1 est une vue en coupe verticale d'une pompe selon un mode de réalisation particulier de l'invention,
[Fig 2] La figure 2 est une vue en perspective d'une coupe verticale de la pompe de la fig. 1.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. De même le terme « étanche » n'est pas limité au sens strict d'une étanchéité parfaite, mais est entendu avec une certaine tolérance dans le domaine technique considéré. Ces tolérances sont notamment introduites par l'adverbe « sensiblement », sans que ce terme soit nécessairement répété devant chaque adjectif.

En référence aux figures, la pompe 1 selon l'invention est destinée à être intégrée à un groupe de filtration d'eau d'un bassin. Ce groupe de filtration vise notamment à débarrasser l'eau contenue dans le bassin des particules solides provenant de l'environnement extérieur du bassin et des utilisateurs et de diffuser un ou des produits de désinfection. On appelle « bassin » tout contenant d'eau à destination ludique, récréative, bien-être, thérapeutique, comme une piscine, un bain à remous, un bassin de plongeon, ou similaire, sans que ces exemples ne soient limitatifs.

La pompe 1 est verticale, c'est-à-dire que son axe moteur est positionné verticalement dans le bloc de filtration.

La pompe comporte un corps de pompe 2, dans lequel sont logés les différents éléments constitutifs de la pompe décrits ci-après.

La pompe 1 est semi-immergée, ce qui au sens de la présente invention signifie qu'elle est en partie sous le niveau 3 de l'eau du bassin, et en partie au-dessus du niveau 3. Plus précisément, la pompe 1 comprend une partie hydraulique 4, partiellement immergée, et dont certains éléments non immergés peuvent être exposés à l'eau du bassin par exemple par des éclaboussures, et une partie moteur 5, située au-dessus de la partie hydraulique 4, et dont les éléments sont, dans un fonctionnement normal, à l'abri de l'eau.

La pompe 1 comporte un moteur 6, par exemple un moteur électrique asynchrone, monophasé, alimenté en courant alternatif, d'une puissance de l'ordre de 200 à 1000W. Le moteur est situé dans la partie moteur 5, et est donc au-dessus du niveau 3, et à l'abri de l'eau.

La pompe 1 comporte également un arbre 7 d'axe vertical, s'étendant sous le moteur 6 et configuré pour être entraîné en rotation par le moteur 6. L'arbre 7 est de préférence de section circulaire. L'extrémité basse de l'arbre 7 est située sous le niveau 3. Lorsque la pompe 1 est en fonctionnement, la rotation de l'arbre 7 crée une force centrifuge dans l'eau, ce qui génère un effet vortex et fait monter l'eau dans le corps de la pompe.

La pompe 1 comporte encore une paroi 9 transversale à l'axe de l'arbre 7. L'axe de l'arbre 7 étant vertical, on entend ici par le terme « transversale » que la paroi 9 n'est pas verticale. La paroi 9 est de préférence horizontale, mais elle peut présenter un angle avec l'horizontale, sans sortir du cadre de l'invention. La paroi 9 est solidaire du corps de pompe 2. La paroi 9 appartient par exemple au corps du moteur 6, qui enveloppe les éléments constitutifs du moteur 6. De préférence, la paroi 9 correspond à la paroi inférieure du corps du moteur 6.

Dans le cadre de la présente invention, le terme « solidaire » appliqué à deux pièces signifie que ces deux pièces sont fixes l'une par rapport à l'autre, sans mouvement relatif, dans les conditions normales d'utilisation de la pompe.

La paroi 9 est traversée par l'arbre 7. La paroi 9 comporte donc une ouverture, par laquelle passe l'arbre 7. Cette ouverture est de préférence circulaire, ce qui permet de réduire l'espace entre les bords de l'ouverture et l'arbre 7, un joint d'étanchéité pouvant être situé au niveau des bords de l'ouverture afin de protéger le moteur 6 de l'eau.

La pompe 1 comporte selon l'invention un dispositif d'étanchéité 10 permettant d'empêcher l'eau et d'éventuels cristaux de sel d'accéder à la partie supérieure de la partie basse hydraulique. Le dispositif d'étanchéité 10 se trouve sous le moteur et s'étend autour d'un tronçon de l'arbre 7, de façon à former une chambre 11 étanche. Ainsi les éléments qui sont susceptibles d'être atteints par des éclaboussures d'eau et se trouvant en haut de la partie hydraulique 4 et en bas de la partie moteur 5 de la pompe 1 sont protégés de cette eau. Ceci est particulièrement utile lorsque l'eau est légèrement salée, le sel étant corrosif pour certains de ces éléments. De plus les cristaux de sel, progressant par capillarité avec les éclaboussements successifs, exerce une pression mécanique et chimique sur ces éléments qui augmente l'effet corrosif du sel.

Le dispositif d'étanchéité 10 comporte une ouverture extérieure inférieure 12, de préférence de forme circulaire, traversée par l'arbre 7. Les bords intérieurs de l'ouverture extérieure inférieure 12 sont en contact avec l'arbre 7 de façon étanche, de sorte que de l'eau ne puisse pas remonter entre l'arbre 7 et les bords de l'ouverture extérieure inférieure 12. Le dispositif d'étanchéité 10 comporte également une ouverture extérieure supérieure 13, dont les bords intérieurs sont en contact avec la paroi 9 de façon étanche, de sorte que de l'eau ne puisse pas passer entre la paroi 9 et l'ouverture extérieure supérieure 13. L'ouverture extérieure supérieure 13 est de préférence de forme circulaire, mais elle peut prendre d'autres formes pour s'adapter à la géométrie de la paroi 9.

L'ouverture extérieure supérieure 13 a par exemple une dimension supérieure ou égale à trois fois la surface de la section de l'arbre 7 prise au niveau de l'ouverture extérieure supérieure 13, afin de bien inclure dans la chambre 11 les éléments situés autour de la partie supérieure de l'arbre 7 qui doivent être protégés de l'eau du bassin.

La hauteur du dispositif d' étanchéité 10, définie comme étant la longueur de la section du tronçon de l'arbre 7 compris entre la paroi 9 et l'ouverture extérieure inférieure 12, est par exemple supérieure ou égale au tiers du diamètre moyen de la section de l'arbre 7 mesuré au niveau du dispositif d'étanchéité.

Les ouvertures extérieures inférieure 12 et supérieure 13 sont nommées comme telles car elles débouchent sur l'extérieur du dispositif d'étanchéité 10.

Le dispositif d'étanchéité 10 comporte de préférence un déflecteur 14. Le déflecteur 14 peut être réalisé dans toute matière utilisée habituellement pour les joints d'étanchéité, par exemple un élastomère tel qu'un polymère fluoré. Les matériaux suivants peuvent par exemple convenir : un fluorocarbone (FKM), un copolymère butadiène-acrylonitrile hydrogénés (HNBR), ou encore un copolymère butadiène-acrylonitrile (HBR). La dureté Shore de l'élastomère est de préférence comprise entre 60 et 80, par exemple 70.

Dans un premier mode de réalisation (non illustré), le déflecteur 14 comporte l'ouverture extérieure inférieure 12 et l'ouverture extérieure supérieure 13. Ainsi la chambre étanche peut être formée dans une pompe semi-immergée classique, par l'ajout d'une pièce unique. La chambre étanche peut alors être délimitée par la paroi 9, le déflecteur, et le tronçon de l'arbre se trouvant au niveau entre les ouvertures extérieures supérieure 13 et inférieure 12.

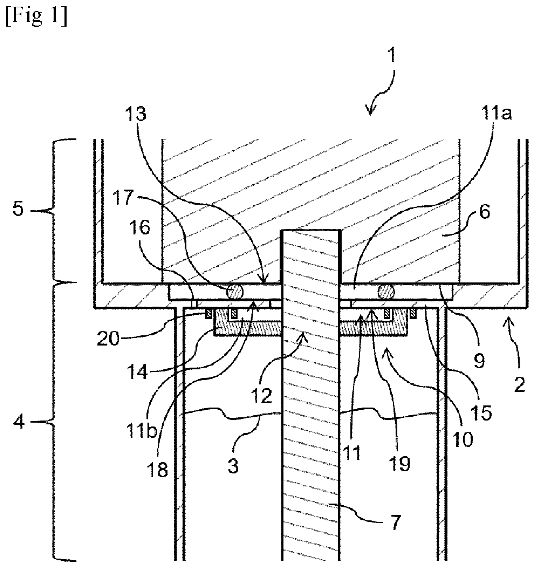

Dans un deuxième mode de réalisation illustré en figure 1, la pompe 1 comporte une cloison 15 transversale à l'axe de l'arbre 7. L'axe de l'arbre 7 étant vertical, on entend ici par le terme « transversale » que la cloison 15 n'est pas verticale. La cloison 15 est de préférence horizontale, mais elle peut présenter un angle avec l'horizontale, sans sortir du cadre de l'invention. La cloison 15 est solidaire du corps de pompe 2. La cloison 15 appartient par exemple au corps de la pompe, aussi appelé lanterne, qui enveloppe l'ensemble des éléments constitutifs de la pompe.

La cloison 15 est traversée par l'arbre 7. La cloison 15 comporte donc une ouverture, par laquelle passe l'arbre 7. Cette ouverture est de préférence circulaire, ce qui permet de réduire l'espace entre les bords de l'ouverture et l'arbre 7, un joint d'étanchéité pouvant être situé au niveau des bords de l'ouverture afin de protéger le moteur 6 de l'eau. Toutefois ce joint d'étanchéité n'est pas forcément utile dans le cadre de l'invention, puisque l'ouverture de la cloison 15 par laquelle passe l'arbre 7 est située dans la chambre 11.

La cloison 15 comporte au moins un trou 16 situé en-dehors de la chambre, afin que de l'eau puisse descendre de la partie moteur 5 vers la partie hydraulique 4. Ceci est notamment imposé par les normes de sécurité électrique.

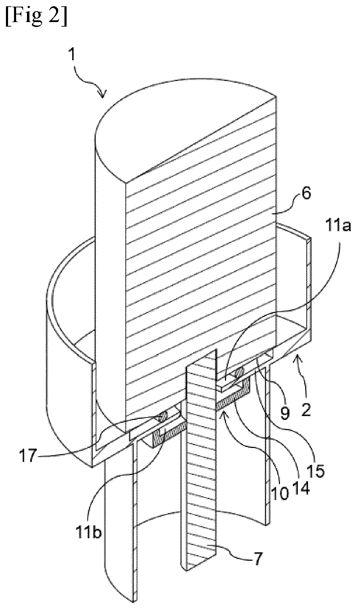

Dans le mode de réalisation illustré en figure 2, la cloison 15 divise la chambre 11 en deux sous-chambres 11a, 11b.

Une première sous-chambre 11a est située entre la paroi 9 et la cloison 15, notamment sous la paroi 9 et au-dessus de la cloison 15. La première sous-chambre 11a est délimitée en outre par un tronçon de l'arbre 7 et un joint de chambre 17. Le joint de chambre 17 comporte l'ouverture extérieure supérieure 13, et une ouverture intérieure inférieure 18 dont les bords sont en contact étanche avec la cloison 15, notamment avec la face supérieure de la cloison 15. En d'autres termes, le joint de chambre 17 est intercalé en contact étanche entre la paroi 9 et la cloison 15.

La paroi 9 et la cloison 15 étant solidaires du corps de pompe 2, elles sont fixes l'une par rapport à l'autre. Le joint de chambre 17 est donc de préférence solidaire à ces deux surfaces, c'est-à-dire au corps de pompe 2, afin de procurer une étanchéité statique.

Le joint de chambre 17 est de préférence un joint torique, qui présente l'avantage d'être un joint standard dont les dimensions seront choisies en fonction de l'espacement entre la paroi 9 et la cloison 15. La plupart des joints toriques connus peuvent convenir, qu'ils soient de section plate, circulaire, quadrilobe, etc. Il peut également s'agir d'un joint non torique sans sortir du cadre de l'invention. Le joint de chambre 17 peut être réalisé dans toute matière utilisée habituellement pour les joints d'étanchéité, par exemple un élastomère tel qu'un polymère fluoré. Les matériaux suivants peuvent par exemple convenir : un fluorocarbone (FKM), un copolymère butadiène-acrylonitrile hydrogénés (HNBR), ou encore un copolymère butadiène-acrylonitrile (NBR). La dureté Shore de l'élastomère est de préférence comprise entre 60 et 80, par exemple 70.

Une deuxième sous-chambre 11b est située sous la cloison 15. La deuxième sous-chambre 11b est délimitée en outre par un tronçon de l'arbre et le déflecteur 14. Le déflecteur 14 comporte l'ouverture extérieure inférieure 12, et une ouverture intérieure supérieure 19 dont les bords sont en contact étanche avec la cloison 15, notamment avec la face inférieure de la cloison 15.

Les deux sous-chambres 11a, 11b communiquent au moins par l'ouverture de la cloison 15 par laquelle passe l'arbre 7, à part si un joint d'étanchéité est situé entre les bords de cette ouverture et l'arbre.

Le déflecteur 14 est en contact étanche avec la paroi 9, dans le premier mode de réalisation, ou la cloison 15, dans le deuxième mode de réalisation illustré en fig. 1, et l'arbre 7, par les bords de son ouverture extérieure inférieure 12. Or l'arbre 7 est en mouvement par rapport au moteur 6, et donc il est en mouvement par rapport à la paroi 9 et éventuellement la cloison 15 qui sont solidaires du moteur 6.

Dans la variante préférée de l'invention, le déflecteur 14 est solidaire de l'arbre 7. L'étanchéité entre les bords de l'ouverture extérieure inférieure 12 et l'arbre 7 est donc une étanchéité statique, et l'étanchéité entre l'ouverture extérieure supérieure 13 et la paroi 9, dans le premier mode de réalisation, ou l'ouverture intérieure supérieure 19 et la cloison 15, dans le deuxième mode de réalisation, est une étanchéité dynamique. Pour réaliser l'étanchéité dynamique, l'ouverture extérieure supérieure 13 ou intérieure supérieure 19 du déflecteur 14 peut comporter une lèvre flexible dont l'extrémité est apte à épouser la forme de la paroi 9 ou de la cloison 15, en exerçant une pression sur la paroi 9 ou la cloison 15.

Dans une autre variante de l'invention, le déflecteur 14 est solidaire du corps de pompe 2. L'étanchéité entre les bords de l'ouverture extérieure inférieure 12 et l'arbre 7 est donc une étanchéité dynamique, et l'étanchéité entre l'ouverture extérieure supérieure 13 et la paroi 9, dans le premier mode de réalisation, ou l'ouverture intérieure supérieure 19 et la cloison 15, dans le deuxième mode de réalisation, est une étanchéité statique. Pour réaliser l'étanchéité dynamique, l'ouverture extérieure inférieure 12 du déflecteur 14 peut comporter une lèvre flexible dont l'extrémité est apte à épouser la forme de l'arbre 7, en exerçant une pression sur l'arbre 7.

La lèvre flexible peut être réalisée en une pièce avec le reste du déflecteur 14, ou être fabriquée séparément, puis fixée sur le reste du déflecteur 14. Dans ce cas, il est possible d'utiliser une matière différente pour la lèvre, par exemple une matière plus souple que le reste du déflecteur 14.

Quel que soit le mode de réalisation concerné, le dispositif d'étanchéité, et en particulier le déflecteur et/ou le joint de chambre sont de préférence démontables, afin de pouvoir être facilement nettoyés ou remplacés en cas de besoin.

Le dispositif d'étanchéité 10 permet de fournir une barrière étanche permettant d'empêcher l'accès à l'eau et éventuellement aux cristaux de sel à la partie haute moteur de la pompe, et au haut de la partie basse hydraulique. Toutefois cette étanchéité n'est pas toujours suffisante. En effet les déflecteurs et/ou joints utilisés ne procurent pas nécessairement une étanchéité parfaite, notamment aux endroits où l'étanchéité est dynamique. Dans un mode de réalisation préféré de l'invention, la chambre 11 est remplie d'un produit constituant une barrière supplémentaire d'étanchéité. Ce produit est par exemple une graisse hydrophobe. Le caractère hydrophobe présente l'avantage que le produit a tendance à rester dans la chambre 11, l'extérieur étant un milieu humide. De plus les graisses peuvent présenter des niveaux de viscosité cinématique pouvant convenir à la présente invention, par exemple compris entre 250 et 300 mm²/s à 25°C.

Afin d'éviter que la graisse hydrophobe, ou un autre produit, ne s'échappe de la chambre étanche, la pompe 1 peut comporter un ou plusieurs éléments annulaires 20. Les éléments annulaires 20 peuvent s'étendre autour de l'arbre 7, directement sous la cloison 15, au voisinage du contact entre le déflecteur 14 et la cloison 15. Les éléments annulaires 20 sont par exemple placés à moins de 3 mm de cette zone de contact, de préférence à une distance égale ou inférieure à 1 mm. Afin de former une chicane efficace, les éléments annulaires 20 présentent de préférence au moins une face plane parallèle à l'axe de l'arbre 7, d'une dimension par exemple comprise entre 2 et 3 mm selon l'axe de l'arbre 7. Pour ce faire, et comme illustré sur la fig. 1, la section des éléments annulaires 20 est de préférence rectangulaire.

La pompe peut comporter un élément annulaire 20 unique, disposé de préférence à l'extérieur de la chambre étanche 11, c'est-à-dire à l'extérieur du périmètre du déflecteur 14. Dans un mode de réalisation préféré, la pompe comporte deux éléments annulaires 20, l'un disposé à l'extérieur de la chambre étanche 11, et l'autre disposé à l'intérieur de la chambre étanche 11.

La présence des éléments annulaires 20 est particulièrement pertinente lorsque le déflecteur 14 est solidaire de l'arbre 7, et que l'étanchéité entre la cloison 15 et le déflecteur 14 est une étanchéité dynamique.

La présente invention concerne également un groupe de filtration d'eau d'un bassin, notamment une piscine, comportant une pompe 1 selon l'invention, et une cellule d'électrolyse pour un traitement de l'eau au sel. En effet l'utilisation d'une pompe 1 comportant un dispositif d'étanchéité 10 est spécialement avantageuse lorsque l'eau de la piscine est salée, et lorsqu'en s'évaporant, les cristaux de sel s'attaquent aux éléments de la pompe 1 situés à proximité et au-dessus du niveau 3 de l'eau.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Pompe (1) verticale semi-immergée pour un groupe de filtration d'eau d'un bassin, notamment une piscine, comportant un corps de pompe (2) dans lequel sont logés un moteur (6) configuré pour être situé au-dessus du niveau (3) de l'eau du bassin, un arbre (7) d'axe vertical s'étendant du et sous le moteur (6), l'extrémité basse dudit arbre (7) étant configurée pour être située sous le niveau (3) de l'eau du bassin, ledit arbre (7) étant configuré pour être entrainé en rotation par ledit moteur (6), une paroi (9) et une cloison (15) situées sous le moteur (6), traversées par ledit arbre (7), et solidaires dudit corps de pompe (2), ladite cloison (15) étant située sous la paroi (9),
***caractérisée en ce que*** ladite pompe (1) comporte en outre un dispositif d'étanchéité (10), ledit dispositif d'étanchéité (10) comprenant :
- un déflecteur (14) comportant une ouverture extérieure inférieure (12) traversée par ledit arbre (7), et dont les bords intérieurs sont en contact avec ledit arbre (7) de manière étanche, et une ouverture intérieure supérieure (19) traversée par ledit arbre (7), dont les bords sont en contact avec ladite cloison (15) de manière étanche, et
- un joint de chambre (17) comportant une ouverture extérieure supérieure (13) dont les bords sont en contact avec ladite paroi (9) de manière étanche, et une ouverture intérieure inférieure (18) traversée par ledit arbre (7), dont les bords sont en contact avec ladite cloison (15) de manière étanche,
ledit dispositif d'étanchéité (10) étant agencé pour former une chambre étanche (11) s'étendant sous ledit moteur (6) et tout autour d'un tronçon dudit arbre (7), la chambre (11) étant divisée en deux sous-chambres (11a, 11b) par la cloison (15).

2. Pompe (1) selon la revendication 1, **caractérisée en ce que** ledit déflecteur (14) et/ou ledit joint de chambre (17) sont réalisés dans un élastomère tel qu'un polymère fluoré.

3. Pompe selon l'une quelconque des revendications 1 à 2, **caractérisée en ce que** ledit déflecteur (14) est solidaire dudit arbre (7).

4. Pompe selon l'une quelconque des revendications 1 à 2, **caractérisée en ce que** ledit déflecteur (14) est solidaire dudit corps de pompe (2).

5. Pompe selon l'une quelconque des revendications 1 à 4, **caractérisée en ce que** ledit joint de chambre (17) est solidaire dudit corps de pompe (2).

6. Pompe selon l'une quelconque des revendications 1 à 5, **caractérisée en ce que** ladite chambre étanche (11) est au moins en partie remplie par une graisse hydrophobe.

7. Pompe selon la revendication 6, **caractérisée en ce que** ladite graisse hydrophobe présente une viscosité cinématique comprise entre 250 et 300 mm²/s à une température de 25°C.

8. Pompe selon l'une des revendications 1 à 7, comportant au moins un élément annulaire (20) disposé autour de l'arbre (7), contre et sous la cloison (15), la distance entre l'élément annulaire (20) et la zone de contact entre le déflecteur (14) et la cloison (15) étant inférieure à 3 mm.

9. Pompe selon la revendication 8, dans laquelle au moins un élément annulaire (2) est disposé hors de la chambre étanche (11).

10. Pompe selon la revendication 8, comportant au moins deux éléments annulaire (20), au moins un des éléments annulaire (20) étant disposé dans la chambre étanche (11), et au moins un des éléments annulaire (20) étant disposé hors de la chambre étanche (11).

11. Groupe de filtration d'eau d'un bassin, notamment une piscine, comportant une pompe verticale semi-immergée selon l'une quelconque des revendications 1 à 10, et une cellule d'électrolyse pour un traitement de l'eau au sel.

12. Bassin, notamment une piscine, comportant un groupe de filtration selon la revendication 11, l'eau dudit bassin comportant entre 0,5 et 6 grammes par litre de sel.

## Patentansprüche

1. Vertikale halbtauchende Pumpe (1) für eine Wasserfiltergruppe eines Beckens, insbesondere eines Schwimmbeckens, die ein Pumpengehäuse (2) aufweist, in dem ein Motor (6) untergebracht ist, der so angeordnet ist, dass er sich über dem Wasserspiegel (3) des Beckens befindet, wobei sich eine Welle (7) mit vertikaler Achse vom Motor (6) und unter diesem erstreckt, das untere Ende der Welle (7) mit vertikaler Achse so angeordnet ist, dass es sich unter dem Wasserspiegel (3) des Beckens befindet, die Welle (7) so angeordnet ist, dass sie von dem Motor (7) in Drehung versetzt wird, die Welle (7) durch eine Wand (9) und eine Trennwand (15), die sich unter dem Motor (6) befinden und fest mit dem Pumpengehäuse (2) verbunden sind, durchgeführt, wobei die Trennwand (15) sich unter der Wand (9) befindet,
***dadurch gekennzeichnet,* dass** die Pumpe (1) außerdem eine Dichtungsvorrichtung (19) aufweist, wobei die Dichtungsvorrichtung (10) Folgendes umfasst:
- eine Ablenkeinrichtung (14) mit einer Außenöffnung (12) auf der Unterseite, durch welche die Welle (7) führt und deren innere Ränder einen dichten Kontakt mit der Welle (7) herstellen, und einer Innenöffnung (19) auf der Oberseite, durch welche die Welle (7) führt und deren Ränder einen dichten Kontakt mit der Trennwand (15) herstellen, und
- eine Kammerdichtung (17) mit einer Außenöffnung (13) auf der Oberseite, deren Ränder einen dichten Kontakt zur Wand (9) herstellen, und eine Innenöffnung (18) auf der Unterseite, durch welche die Welle (7) führt und deren Ränder eine dichten Kontakt zur Trennwand (15) herstellen,
wobei die Dichtungsvorrichtung (10) so angeordnet ist, dass sie eine dichte Kammer (11) bildet, die sich unter dem Motor (6) und um einen Abschnitt der Welle (7) herum erstreckt, und die Kammer (11) durch die Trennwand (15) in zwei Unterkammern (11a, 11b) unterteilt ist.

2. Pumpe (1) nach Anspruch 1, die **dadurch gekennzeichnet ist, dass** die Ablenkeinrichtung (14) und/oder die Kammerdichtung (17) aus einem Elastomer, wie z. B. einem Fluorpolymer, hergestellt sind.

3. Pumpe nach einem der Ansprüche 1 bis 2, die **dadurch gekennzeichnet ist, dass** die Ablenkeinrichtung (14) fest mit der Welle (7) verbunden ist.

4. Pumpe nach einem der Ansprüche 1 bis 2, die **dadurch gekennzeichnet ist, dass** die Ablenkeinrichtung (14) fest mit dem Pumpengehäuse (2) verbunden ist.

5. Pumpe nach einem der Ansprüche 1 bis 4, die **dadurch gekennzeichnet ist, dass** die Kammerdichtung (17) fest mit dem Pumpengehäuse (2) verbunden ist.

6. Pumpe nach einem der Ansprüche 1 bis 5, die **dadurch gekennzeichnet ist, dass** die dichte Kammer (11) zumindest teilweise mit einem hydrophoben Fett gefüllt ist.

7. Pumpe nach Anspruch 6, **dadurch gekennzeichnet, dass** das hydrophobe Fett eine kinematische Viskosität zwischen 250 und 300 mm²/s bei einer Temperatur von 25°C aufweist.

8. Pumpe nach einem der Ansprüche 1 bis 7, die mindestens ein ringförmiges Element (20) aufweist, das um die Welle (7) herum unter der Trennwand (15) und gegen diese angeordnet ist, wobei der Abstand zwischen dem ringförmigen Element (20) und dem Kontaktbereich zwischen der Ablenkvorrichtung (14) und der Trennwand (15) unter 3 mm liegt.

9. Pumpe nach Anspruch 8, bei der mindestens ein ringförmiges Element (2) außerhalb der dichten Kammer (11) angeordnet ist.

10. Pumpe nach Anspruch 8, die mindestens zwei ringförmige Elemente (20) aufweist, wobei mindestens eines der ringförmigen Elemente (20) in der dichten Kammer (11) und mindestens eines der ringförmigen Elemente (20) außerhalb der dichten Kammer (11) angeordnet ist.

11. Filtergruppe für Wasser eines Beckens, insbesondere eines Schwimmbeckens, mit einer vertikalen, halbtauchenden Pumpe nach einem der Ansprüche 1 bis 10 und einer Elektrolysezelle für eine Wasserbehandlung mit Salz.

12. Becken, insbesondere ein Schwimmbad, das eine Filtergruppe nach Anspruch 11 umfasst, wobei das Wasser des Beckens zwischen 0,5 und 6 Gramm Liter Salz enthält.

## Claims

1. A semi-submerged vertical pump (1) for a water filtration unit of a pool, in particular a swimming pool, comprising a pump body (2) in which are housed a motor (6) configured to be located above the level (3) of the water of the pool, a shaft (7) with a vertical axis extending from and under the motor (6), the lower end of said shaft (7) being configured to be located under the level (3) of the water of the pool, said shaft (7) being configured to be driven in rotation by said motor (6), a wall (9) and a partition (15) located under the motor (6), through which said shaft (7) passes, and secured to said pump body (2), said partition (15) being located under the wall (9),
***characterised in that*** said pump (1) further comprises a sealing device (10), said sealing device (10) comprising:
- a baffle (14) having a lower outer opening (12) through which said shaft (7) passes, and the inner edges of which are in sealing contact with said shaft (7), and an upper inner opening (19) through which said shaft (7) passes, the edges of which are in sealing contact with said partition (15), and
- a chamber seal (17) comprising an upper outer opening (13), the edges of which are in sealing contact with said wall (9), and a lower inner opening (18), through which said shaft (7) passes, the edges of which are in sealing contact with said partition (15),
said sealing device (10) being arranged to form a sealed chamber (11) extending under said motor (6) and all around a section of said shaft (7), the chamber (11) being divided into two sub-chambers (11a, 11b) by the partition (15).

2. The pump (1) according to claim 1, **characterised in that** said baffle (14) and/or said chamber seal (17) are made of an elastomer such as a fluoropolymer.

3. The pump as claimed in any one of claims 1 to 2, **characterised in that** said baffle (14) is secured to said shaft (7).

4. The pump according to claim 1 or claim 2, **characterised in that** said baffle (14) is secured to said pump body (2).

5. The pump according to any one of claims 1 to 4, **characterised in that** said chamber seal (17) is secured to said pump body (2).

6. The pump according to any one of claims 1 to 5, **characterised in that** said sealed chamber (11) is at least partially filled with a hydrophobic grease.

7. The pump according to claim 6, **characterised in that** said hydrophobic grease has a kinematic viscosity of between 250 and 300 mm²/s at a temperature of 25°C.

8. The pump according to any one of claims 1 to 7, comprising at least one annular element (20) arranged around the shaft (7), against and under the partition (15), the distance between the annular element (20) and the contact area between the baffle (14) and the partition (15) being less than 3 mm.

9. The pump according to claim 8, wherein at least one annular element (20) is arranged outside the sealed chamber (11).

10. The pump according to claim 8, comprising at least two annular elements (20), at least one of the annular elements (20) being disposed in the sealed chamber (11), and at least one of the annular elements (20) being disposed outside the sealed chamber (11).

11. A water filtration unit for a pool, in particular a swimming pool, comprising a semi-submerged vertical pump according to any one of claims 1 to 10, and an electrolysis cell for treating water with salt.

12. A pool, in particular a swimming pool, comprising a filtration unit according to claim 11, the water in said pool comprising between 0.5 and 6 grams per litre of salt.
